# EUROPEAN PATENT APPLICATION

(11) **EP 3 333 629 A1**
(43) Date of publication of application: **13.06.2018**
(21) Application number: 16785905.7
(22) Date of filing: 23.04.2016
(51) Int. Cl.: G03B 21/00, B29C 67/00, B33Y 50/02

(54) **IMAGING AND FORMING METHOD USING PROJECTION OPERATION AND BACK PROJECTION METHOD**

(30) Priority: 28.04.2015 CN 201510204357; 01.07.2015 CN 201510371689; 02.11.2015 CN 201510723831
(71) Applicant: Wu, Xiang, Beijing 102206 (CN)
(72) Inventor: Wu, Xiang, Beijing 102206 (CN)
(74) Representative: Norris, Timothy Sweyn
(86) International application number: PCT/CN2016/080097
(87) International publication number: WO 2016/173474

(57) **Abstract**

A method of the present invention comprises: manufacturing a two-dimensional or three-dimensional real image using a projection operation and back projection method, and also comprises: completing two-dimensional display, three-dimensional display, two-dimensional printing and three-dimensional printing using the real image. The present invention belongs to the field of flat-panel display, the field of 3D stereographic display, the technical field of printing, the field of rapid prototyping, the field of additive manufacturing, and the field of 3D printing. The method is similar to a projection data collection and back projection reconstruction method in the computed tomography (CT) technology. The achievement of the computed tomography (CT) technology is the projection data collection of real objects and reconstruction of digitized tomographic images, so as to convert the real objects into virtual data. Projection data collection is replaced with projection operation, the digitized back projection reconstruction method is replaced with the real back projection method, so as to convert virtual data into real objects or real images. The adopted projection rays comprise light, electromagnetic waves, high-energy rays, particle flows, sound waves, shock waves, currents or chemical waves.

## Description

### Technical field

The present invention belongs to the field of rapid prototyping, the field of additive manufacturing, the field of 3D printing. The invention is a manufacturing method comprises discreting and/or accumulating techniques. The present invention belongs to the field of non-emissive flat panel display, the field of emissive flat panel display, the field of 3D stereographic display, the field of printing. The invention is an imaging method comprises two-dimensional case and/or three-dimensional case.

### Background art

In the field of rapid prototyping/additive manufacturing/3D printing, there are many different technologies for different functions. A discreting technology decomposes a virtual model to data, and an accumulating technology composes substance to a real object refer the data.

Discreting and accumulating are indispensable steps in rapid prototyping/additive manufacturing/3D printing. Usually, accumulating technologies have names. Each name represents corresponding discreting technology.

Prior art mainly uses a laser, electron beam, plasma arc, spray adhesive, spray forming substance and so on to make rapid prototyping/additive manufacturing/3D printing. Among them, the technologies using light curing resin involve SLA technology, DLP technology, and CLIP technology. The technology using ultrasonic involves ultrasonic additive manufacturing (UAM) technology. SLA technology makes use of scanning laser radiation to solidify the photosensitive resin. DLP technology makes use of light projection to solidify the photosensitive resin. The two technologies are to solidify photosensitive resin into target objects as layer by layer. CLIP technology, as an improvement of two technologies, is still a continuous curing layer by layer. UAM technology mainly uses two principles that ultrasonic cutting and ultrasonic welding to weld the metallic thin layer into the target object.

The field of non-emissive flat panel display includes liquid crystal display (LCD) technology, electronic paper (ePaper) technology, microdisplay projection (MDP) technology.

The field of emissive flat panel display includes light-emitting diode display / organic light emitting diode display (LED/OLED) technology, scanning electron tube (CRT) technology, plasma display (PDP) technology, field emission display / field ion display (FED/FID) technology, vacuum fluorescent display (VFD) technology.

The 3D stereoscopic display field includes holographic technology, slicing-stacking display technology, and many technologies utilizing binocular parallax.

Among them, holographic technology puts forward the flat panel which is higher than the visible light optical resolution. Slicing-stacking display technology, and many technologies using binocular parallax use of flat panel display panels. In these fields, may exist a non-flat panel, such as spherical panel, cylindrical panel. The non-flat panel still belongs to the field of flat panel display or 3D stereoscopic display.

2D Printing technology is seen as comparable to flat panel display technology. The difference is that the printed results are recorded on paper or other substrates for a long time, and the display results can be rewritten in a short time, which appears on the panel. The 2D printing method includes transferring the material to paper or other substrates, also include directly changing the color of the paper or substrate.

### Technical problem

The prior art rapid prototyping/additive manufacturing/3D printing technologies involving stereolithography include SLA technology and DLP technology. They are realized by layer by layer exposure and layer by layer stacking. The present invention uses light but is not limited to light curing resin. The invention realizes whole object exposure without layering, can also be used as multi-layer simultaneous exposure, and can also be used as layer by layer exposure.

The prior art rapid prototyping/additive manufacturing/3D printing technologies involving ultrasonic wave include ultrasonic material making (UAM) technology. It realizes rapid prototyping/additive manufacturing/3D printing by layer by layer welding and layer by layer stacking. The present invention uses ultrasonic, but not limited to welding. The present invention realizes whole object forming without layering, can also be used as multi-layer simultaneous forming, and can also be used as layer by layer forming.

In the prior art of light curing resin or ultrasonic rapid prototyping/additive manufacturing/3D printing technologies, a forming object containing a consistent physical quantity (such as color), or a forming object containing physical quantity inconsistent but the quantity is not controlled. The invention is capable of controlling the physical quantity of a forming object, depending on the characteristics of the forming substance, and can ignore that controlling the physical quantity of a forming object.

In the field of flat panel display, line-field wire layout is often used to realize the addressing of pixel units. This allows a transparent conductive material to be used on the front of the panel. High-quality requirements also increase the difficulty of making line-field wire and other components. In the field of flat panel display, the performance conformance requirements of pixel units are very demanding. The present invention does not have the line-field wiring and does not divide the pixel units in the panel, thereby avoiding the deficiency of the prior art.

In the field of flat panel display, both front and rear projection technologies are included. These techniques concern projective distance or projective thickness. In order to achieve thinness, complex optical path components are particularly required. The present invention including that has projection thickness and/or no projection thickness and does not need complicated optical path components for achieving thinness, thereby avoiding the deficiency of the prior art.

In the field of 3D stereoscopic display, slicing-stacking method is included. This requires flat panel display units stacked at many levels. The present invention including preferred scheme: It does not need to separate the flat panel display unit and can be regarded as a continuum of many flat display units, thereby avoiding the deficiency of the prior art.

2D printing techniques often use mechanical line-field scanning or optical line-field scanning to create visible images or create invisible images. The invention does not make a line-field scan to realize a 2D visible image or a 2D invisible latent image more rapidly.

Computed tomography (CT) technique is accomplished by projection data acquisition and tomographic image reconstruction. The conversion from real object to virtual model. The invention uses the projection operation and the back projection method of the computer tomography (CT) technology to apply in the field of rapid prototyping/additive manufacturing/3D printing, 3D/2D display or 2D printing. The conversion from virtual model to real object or real image.

### Solution to the problem

### Technical solutions

### 1 Noun definition

Ray: A physical/chemical object having straight line property and occupying space regions. The concept includes light, electromagnetic wave, high-energy ray, particles flow, sound wave, shock wave, current, or chemical wave.

Light: For all kinds of light, high-energy radiation, or substance flow, are replaced by "light". The concept includes electromagnetic wave, infrared light, visible light, ultraviolet light, laser light, X-ray, radiation, cosmic ray, electron beam, neutron beam, proton beam or helium nuclei beam.

Vibration: The concept includes infrasonic wave, sound wave, ultrasonic wave, or shock wave.

Light-induced substance: A substance which changes the physical/chemical properties by light.

The concept includes the case that light to change a solid into a liquid, light to change a liquid into a solid, light to change a solid to a gas, light to change a gas into a solid.

The concept includes the case that light to change density or concentration of matter.

The concept includes the case that light to change the physical/chemical properties of solid, the solids are separated due to changed parts and not changed parts (including that be separated by not light effect based on different physical/chemical properties).

The concept includes the case that light to change the distribution of stresses or the anti-stress ability of solid, the solid is separated automatic, or in vibration, shock, thermal expansion and contraction effect etc..

The concept includes the case that light to change the physical/chemical properties of a liquid, the substance is separated due to changed parts and not changed parts. the liquid change to solid by another effect. The effect may be light or non-light.

The concept includes the case that light to change the physical/chemical properties of a semi-molten material, gelatinous material, the material is separated due to changed parts and not changed parts. (including that be separated by not light effect based on different physical/chemical properties).

The concept includes the case that light to change the physical/chemical properties of a material, the material makes a difference due to changed parts and not changed parts. (but not be separated).

The process of changing the physical/chemical properties of light can be combined with other processes that change physical/chemical properties and work together, can also be performed independently, individually.

Thermally induced substance: A substance which changes the physical/chemical properties by thermal energy.

The concept includes the case that thermal energy to change a solid into a liquid, thermal energy to change a liquid into a solid, thermal energy to change a solid to a gas, thermal energy to change a gas into a solid.

The concept includes the case that thermal energy to change density or concentration of matter.

The concept includes the case that thermal energy changes the physical/chemical properties of solid, the solids are separated due to changed parts and not changed parts (including that be separated by not thermal effect based on different physical/chemical properties).

The concept includes the case that thermal energy changes the distribution of stresses or the anti-stress ability of solid, the solid is separated automatic, or in vibration, shock, thermal expansion and contraction effect etc..

The concept includes the case that thermal energy changes the physical/chemical properties of a liquid, the substance is separated due to changed parts and not changed parts. The liquid change to solid by another effect. The effect may be thermal or non-thermal.

The concept includes the case that thermal energy changes the physical/chemical properties of a semi-molten material, gelatinous material, the material are separated due to changed parts and not changed parts. (including that be separated by not thermal effect based on different physical/chemical properties).

The concept includes the case that thermal energy changes the physical/chemical properties of a material, the material makes a difference due to changed parts and not changed parts. (but not be separated).

The process of changing the physical/chemical properties of thermal energy can be combined with other processes that change physical/chemical properties and work together, can also be performed independently, individually.

Vibration-induced substance: A substance which changes the physical/chemical properties by vibration.

The concept includes the case that vibration to change a solid into a liquid, vibration to change a liquid into a solid, vibration to change a solid to a gas, vibration to change a gas into a solid.

The concept includes the case that vibration to change density or concentration of matter.

The concept includes the case that vibration change the physical/chemical properties of solid, the solids are separated due to changed parts and not changed parts (including that be separated by not vibration effect based on different physical/chemical properties).

The concept includes the case that vibration change the distribution of stresses or the anti-stress ability of solid, the solid is separated automatic, or in vibration, shock, thermal expansion and contraction effect etc..

The concept includes the case that vibration change the physical/chemical properties of a liquid, the substance is separated due to changed parts and not changed parts. The liquid change to solid by another effect. The effect may be vibration or non-vibration.

The concept includes the case that vibration change the physical/chemical properties of a semi-molten material, gelatinous material, the material are separated due to changed parts and not changed parts. (including that be separated by not vibration effect based on different physical/chemical properties).

The concept includes the case that vibration change the physical/chemical properties of a material, the material makes a difference due to changed parts and not changed parts. (but not be separated).

The process of changing the physical/chemical properties of vibration can be combined with other processes that change physical/chemical properties and work together, can also be performed independently, individually.

Fluorescent substance: A substance that emits light due to absorption of light. The emitted light is different from the absorbed light. The concept includes a difference in species or parameters. Such as in the high frequency of ultraviolet light irradiation, fluorescent substance emits low-frequency visible light. Such as electron beams bombard fluorescent substance to emit visible light. Regardless of spectroscopy, fluorescence and phosphorescence are distinguished by "fluorescence".

Astigmatism substance: a substance that changes the direction of incoming lights and causes light to exit. The form of reflection includes diffuse and specular reflections.

### Emissive light substance:

A substance that emits visible light due to the action of an electric current or any physical quantity.

### Passive astigmatism substance:

A substance that alters astigmatism by the action of an electric current or any physical quantity. In other words, a substance that changes the light emitted from a steady incident light due to the action of an electric current or any physical quantity.

. Forming substance: Forming material is a light-induced substance, a thermally induced substance or a vibration induced substance. It has two states that do not change and changed, and also have transition state of two states.

imaging panel/space: A panel bearing visible images or invisible images. In the field of 3D stereoscopic display, the imaging space can be regarded as muti imaging panels stacked over layers. There is no boundary between the panels and it is continuous. There is also a boundary between the panel and the panel, which is discontinuous.

Linear or nonlinear characteristics of imaging panel/space: light, current, or other physical quantities act on/in an imaging panel/space to obtain a visible image or invisible latent image. Latent images are obtained by subsequent development of visible images. In this way, the brightness of any point on the image is linear or nonlinear with the physical quantity of the brightness.

Ray projection unit: A projection unit that emits rays, the concept of ray includes light, electromagnetic waves, high-energy rays, particles, sound waves, shock waves, currents, or chemical waves.

Ray scanning unit: A scanning unit that works on ray, the concept of ray includes light, electromagnetic waves, high-energy rays, particles, sound waves, shock waves, currents, or chemical waves.

Optical projection unit: A projection unit that projecting visible images or projecting invisible images. The concept includes projectors.

Beam scanning unit: A beam scanning unit that emits beams in many different directions and positions. The concept includes laser scanning unit and/or electron beam scanning unit.

Light emitting unit: A light emitting unit is a projection component or a light beam scanning unit.

Vibrating beam scanning unit: A vibrating beam scanning unit that produces vibrating beams in many different directions and positions. The concept includes ultrasonic beam scanning device.

### Vibration wave emitting unit:

A vibration wave emitting unit is a projection unit of a vibrating wave, or a vibrating beam scanning unit.

Addressing unit: a unit that selects a circuit and applies current, or works with other physical quantities.

### Rotation unit:

A rotation unit that rotates the forming substance with other units. Normally, the forming substance acts as the center of rotation, and other units rotate around the forming material. Motion is relative and can be described as the forming material rotating self and the other units without moving.

### Light path unit:

The light path unit changes the light path of the light emitting unit to produce a lot of light beams surrounding the forming material.

Acoustic unit: an acoustic unit that produces a sound field around a forming substance by changing the sound field of a vibrating wave transmitting unit.

Projection computing unit: A projection computing unit that has arithmetic functions, for projection operation, filtering operation and/or weighing operation. The concept includes a computer, microcontroller, chip and/or circuit.

### 2 Technical method

The effect of light is accompanied by heat. No matter which effect is the main cause, they are contained in the invention.

The effect of vibration is accompanied by heat. No matter which effect is the main cause, they are contained in the invention.

The invention can give a specific energy distribution into/onto a forming substance or an imaging panel/space. How to change the amount of physical quantity according to energy depends on the characteristics of the forming substance or the imaging panel/space: what physical quantity is converted from energy and the conversion ratio. Physical quantities include color, transparency, and/or elasticity.

When light is used as a ray, the required major units of the present invention include forming substance/imaging panel/imaging space, rotation unit, light path unit, light emitting unit, projection computing unit, and software running on the projection computing unit. If a rotation unit is used, then the light path unit can be omitted; if a light path unit is used, then the rotation unit can be omitted; and even if they perform overlapping functions, then both rotation unit and light path unit can be used simultaneously.

When vibration is used as a ray, the required major units of the present invention include forming substance/imaging panel/imaging space, rotation unit, acoustic unit, vibration wave emitting unit, projection computing unit, and software running on the projection computing unit. If a rotation unit is used, then the acoustic unit can be omitted; if the acoustic unit is used, then the rotation unit can be omitted; the rotation unit and the acoustic unit can be simultaneously adopted even if perform play overlapping functions.

When the circuit is used, the required major units of the present invention include forming substance/imaging panel/imaging space, addressing unit, projection computing unit, and software running on the projection computing unit.

The projection computing unit makes projection operation on the 2D graph/image or 3D virtual model. In contrast to computed tomography (CT) techniques, it is easy to state the use of projection operation in the present invention:

In computed tomography (CT) technology, a projection operation is the acquisition of fault data. A bundle of narrow X-ray penetrating tissue that decays in the tissue and is eventually received by the detector to obtain a projection of this X-ray beam. When the X-ray source is at a definite position, the X-ray projection values are collected in many directions, forming a sector scan. When the X-ray source and the detector rotate around the tissue, a large number of sector scan data are collected in the same plane, usually with a complete circle. The result of all acquisition is the result of projection operation.

The above process only describes the acquisition of a fault. The CT technique translates the X-ray source along with the detector relative to the tissue, enabling scanning of multiple layer tomographic data. In flat panel display and 2D printing, it is only concerned with the projection operation of a fault, and the operation area is multiple sectors in a plane. In the field of rapid prototyping/additive manufacturing/3D printing/3D stereoscopic display, a model projection operation without layering can be performed, a multiple layer projection operation can be performed at once, and the operation area is multiple cone/cylinder/pyramid/prism/frustum of a cone/frustum of a prism.

In the present invention, projection operations are performed in the projection computing unit. A "virtual beam" penetrating a two-dimensional graph/image, or three-dimensional virtual model. The projection value of the beam is calculated by accumulating the brightness values (A color value are three or more brightness values) of the crossed region. Or according to the characteristics of the model and/or the material to attenuate the beam, the projection value of the beam is calculated. When a virtual light source is set at a determined position, the calculation collects the projection values of "virtual beam" in many directions. The data provided by the calculation method can form data of multiple sector region in a plane, and can also form data of multiple cone region (cone region containing column region and sector region. the word "cone" can be replaced by cone/cylinder/pyramid/prism/frustum of a cone/frustum of a prism) in 3D space. When virtual light source are set at many locations, The calculation collects the projection values of "virtual beam" in many directions for every virtual light source location. The data provided by the calculation method can form data of multiple sector region in a plane, and can also form data of multiple cone region (cone region containing column region and sector region. the word "cone" can be replaced by cone/cylinder/pyramid/prism/frustum of a cone/frustum of a prism) in 3D space. The directions can be collected throughout the perigon, can also spread all over the whole space angle, can also not throughout the perigon, can also not spread all over the whole space angle. A sector region or a cone region containing two-dimensional graphs/images or three-dimensional virtual models. The data of these sector regions or cone regions is the result of projection operations. Processing of 2D graphs/images or 3D virtual models to include at least two kinds: (1) one way is that the virtual beam attenuation in the internal region of a two-dimensional graph/image or 3D virtual model, or the virtual beam attenuation in the external region of a two-dimensional graph/image or 3D virtual model. (2) Another way is that the virtual beam attenuation inside of the near region of the outline of two-dimensional graph/image or near region of the surface of 3D virtual model, or the virtual beam attenuation outside of the near region of the outline of two-dimensional graph/image, or the virtual beam attenuation outside of the near region of the surface of 3D virtual model. Hollow products can be obtained in (2). The two-dimensional graph/image outline can be used as the cutting line to separate the inner and outer regions of the two-dimensional graph/image, and the 3D virtual model surface can be used as the cutting surface to separate the inner and outer regions of the 3D virtual model. In mathematics, "attenuation" is easily replaced by "accumulation", and the invention regards this substitution as an equal substitution.

Because the data of the cone/cylinder/pyramid/prism/frustum of a cone/frustum of a prism region is calculated, it is not the data of one layer. Therefore, it is able to shift the "virtual light source" relative to the digital model, it is able to calculate many layers of data, it is able to do not shift the "virtual light source" relative to the digital model, and it is able to do not calculate many layers of data. In back-projection method, filtering and weighting operations are mentioned. Although the filter operation in computed tomography (CT) technique is divided into the back projection method, the filtering operation and weighting operation in the present invention to be carried out by the projection computing unit. The filtering operation and weighting operation are optional operations belongs to the projection operation. The results of projection operations can be either dynamic or static. In other words, the results of projection operation can change as the imaging or forming process progresses, or it can be no change.

In addition to the projection computing unit, other units perform back-projection. In contrast to computed tomography (CT) techniques, it is easy to state the use of the back-projection method in the present invention.

A back-projection method is one of tomographic image reconstruction methods in computed tomography (CT). It is divided into direct back-projection method and filtered back-projection method. The direct back-projection method directly projected the projection values measured in each direction to the matrix of the image representation. The back-projection results in each direction are superimposed to obtain the reconstructed image. The filtered back-projection method compensates for the shortcomings of the direct back-projection method. The direct back projection method is easy to obtain the fuzzy edge, and the filtered back projection method is easy to obtain a clear edge. The filtered back projection method filters the projection values measured in each direction by filtering operations and then returns the results in each direction to the matrix representing the image. The back projection results in each direction are superimposed to obtain the reconstructed image.

In the present invention, the back projection method performs the forming process. The projection value of each direction obtained by projection data acquisition or projection operation modulates the light beam. The modulated light beam is projected directly into the forming substance. Each light beam in the actual space corresponds to the beam represented by the calculated results in the virtual space. Modulation includes least two methods, depending on the characteristics of the forming substance and/or the conditions of use. One way is stronger light with more projection value, another way is stronger light with less projection value. After the superposition of the beams in each direction, a specific energy distribution is formed in space. These energy distributions are derived from 2D graph/image or 3D virtual models. Energy is absorbed by a forming substance and then forming substance changes physical/chemical properties. The 2D graph/image or virtual model is transformed into real object. The direct back-projection method is to apply the projection results directly to rapid prototyping. The filtered back projection method adds filtering operations to projection operations and then uses the projection results for rapid prototyping. In order to avoid translucent forming substance, and avoid the block of the have been forming part, adding weighting operation in the projection operation, then the projection operation results for rapid prototyping. In weighing operations, at least two methods are used to determine how much each beam is weighted. One way is that a collection of light has been formed through the projection pattern after occlusion part to determine each beam weighted number. Another way is weighted by reckoning, has been partially occluded after forming light projection patterns to determine each beam weighted number. The weighted operation also refers to the attenuation of light in the forming substance. In the mathematical, the projection operation, the filtering operation, and the weighting operation can be carried out in one step, and the final result is obtained directly. It can also be done in steps and finally get results.

In the present invention, the back projection method performs the forming process. The projection value of each direction obtained by projection data acquisition or projection operation modulates the vibrating beam. The modulated vibrating beam is projected directly into the forming substance. Each vibrating beam in the actual space corresponds to the beam represented by the calculated results in the virtual space. Modulation includes least two methods, depending on the characteristics of the forming substance and/or the conditions of use. One way is stronger vibration with more projection value, another way is stronger vibration with less projection value. The vibration beam in each direction is superimposed and a specific energy distribution is formed in space. These energy distributions are derived from 2D graph/image or 3D virtual models. Energy is absorbed by a forming substance, and then forming substance changes physical/chemical properties. The 2D graph/image or virtual model is transformed into real object. The direct back-projection method is to apply the projection results directly to rapid prototyping. The filtered back projection method adds filtering operations to projection operations and then uses the projection results for rapid prototyping. In order to avoid translucent forming substance, and avoid the block of the have been forming part, adding weighting operation in the projection operation, then the projection operation results for rapid prototyping. In weighing operations, at least two methods are used to determine how much each vibrating beam is weighted. One way is that a collection of vibration has been formed through the projection pattern after occlusion part to determine each beam weighted number.Another way is weighted by reckoning, has been partially occluded after forming light projection patterns to determine each beam weighted number. The weighted operation also refers to the attenuation of light in the forming substance. In the mathematical, the projection operation, the filtering operation, and the weighting operation can be carried out in one step, and the final result is obtained directly. It can also be done in steps and finally get results.

In the present invention, the back projection method performs the imaging process. The projection value in each direction obtained by projection data acquisition or projection operation modulates a beam, or current, or other physical quantity. The modulated beam is projected directly onto/into the imaging panel/space. The imaging panel/space contains a substance of fluorescence or astigmatism or a substance that produces latent images. After the superposition of the beams in each direction, a specific light intensity distribution is obtained in the imaging panel/space. These distributions are derived from a two-dimensional graph/image or 3D virtual models, so that the visible image is directly visible or invisible latent image is obtained. For an electric current, an active light emitting material or a passive astigmatism substance is disposed on an imaging panel/space, or a latent image material is disposed of. These substances are electrically conductive and are arranged to form circuits. Driving an imaging panel/space using an addressing unit. The modulated current is applied to the imaging panel/space, and the current energy of each circuit is transformed, and a specific energy distribution is obtained in the imaging panel/space. These distributions are derived from a two-dimensional graph/image or 3D virtual models, so visual images are directly visible or invisible latent images are obtained. For any other physical quantity, following the beam scheme or the current scheme, a particular distribution of a physical property is obtained on the imaging panel/space. These distributions are derived from a two-dimensional graph/image or 3D virtual models, so visual images are directly visible or invisible latent images are obtained.

The direct back-projection is to use the projection results directly for 3D/2D display or 3D/2D printing. The filtered back projection method added a filtering operation into projection operation. the result is used to 3D/2D display or 3D/2D printing. In order to fit an attenuated beam and compensate for other causes of uneven luminance/energy distribution, a filtering projection is added into projection operation. the result is used for 3D/2D display or 3D/2D printing. In mathematical, the projection operation, the filtering operation, and the weighting operation can be carried out in one step, and the final result is obtained directly. It can also be done in steps and finally get results. After the above method, a real image is manufactured on an imaging panel/space. Because the position of the lowest brightness value in the digital image also has a certain energy, the actual minimum brightness is generated in the imaging panel/space. Also, since the position of the highest brightness value in the digital image has limited energy, the actual maximum brightness is generated in the imaging panel/space. Use the linear or nonlinear characteristics of the imaging panel/space to adjust the minimum brightness and/or maximum brightness. The intermediate gray levels are adjusted by linear or nonlinear characteristics of the imaging panel/space.

### The beneficial effects of invention

### Beneficial effects

The invention realizes whole object exposure without layering, can also be used as multi-layer simultaneous exposure, and can also be used as layer by layer exposure.

The present invention realizes whole object forming without layering, can also be used as multi-layer simultaneous forming, and can also be used as layer by layer forming.

The present invention is capable of controlling the physical quantity of a forming object and can ignore that controlling the physical quantity of a forming object.

In the field of flat panel display, The present invention does not have the line-field scanning wiring and does not divide the pixel units in the panel, thereby avoiding the deficiency of the prior art.

In the field of flat panel display, The present invention has no projection thickness and does not need complicated optical path components for achieving thinness, thereby avoiding the deficiency of the prior art.

In the field of 3D stereoscopic display, The present invention preferred scheme: It does not need to separate the flat panel display unit and can be regarded as a continuum of many flat display units, thereby avoiding the deficiency of the prior art.

In the field of 2D printing techniques, the invention does not make a line-field scan to performs a 2D visible image or a 2D invisible latent image more rapidly.

The invention uses the projection operation and the back projection method of the computer tomography (CT) technology to apply in the field of rapid prototyping/additive manufacturing/3D printing, 3D/2D display or 2D printing. The transformation from virtual model to physical/real object.

### The best embodiment of the invention

### The best way to implement

### 1 In case of light curing resin

The resin for light curing is a light-induced substance. The resin is held in a transparent smooth round glass cup and is placed on the rotation table. The center of the cup coincides with the center of rotation. Projecting the light into the glass using a projector. The center line of the projection area is aligned with the rotating shaft. A rotating handle can be provided in the illumination area without using a transparent round glass. Pouring the light curing resin into the rotating handle. Smaller aperture and larger power are recommended for projectors. With a smaller aperture, the intent is to achieve clearer imaging before and after the focal plane is imaged. With the intended as same as smaller aperture, a longer lens focal length can be used. With greater power, the intent is to gain greater power density in the forming region. With the intent as same as greater power, the projector can also be modified to remove a portion of the lens set to achieve a smaller imaging area and greater power density. For option, a mirror is added to the path after the light beam passes through the forming substance so that the beam can be reused.

The projection pattern is controlled by the computer and synchronized with the rotation. The projection pattern is the data of the pyramid region derived from the operation. A lens grating can also be added to the optical path, and the lens grating is used as the light path unit. A pattern in a projection pattern that contains a number of data of pyramid regions. After the light passes through the lens grating, a plurality of pyramid beams are simultaneously sent to the light curing resin. You can also increase the number of projectors and lens gratings. The rotating part can be omitted when the pyramid regions to the light curing resin are enough. When the projectors are enough, the light path unit can be omitted.

Among them, the results of projection operation can be filtered or weighted, or both, can without filtering and weighting operations. The filtering is for clearer energy distribution. The weighting is to compensate for the absorption of light by the material. The weighting is in order to avoid the block from formed part.

When a part of the Light curing resin absorbs light above the threshold, this part is solidified. As a whole, the shape of the curing region corresponds to the shape of the 3D virtual model. Realized the conversion from virtual model to real object. The same or similar method can be applied to other resins, food materials, plastics, light curing agents, metals, ceramics, rubber, glass and the like in light cured resin embodiments. Egg white is a food material.

### 2 Ultrasonic heat treatment solidify egg white

Egg white is a thermally induced substance. Put the egg white in a round cup with a smooth wall and place it on a rotation table.

The center of the cup coincides with the center of rotation. The ultrasonic is projected into the cup by a high-power ultrasonic scanner. The center line of the projection area is aligned with the rotating shaft. A rotating handle may be provided within the ultrasonic radiation region without the use of the cup. Simultaneously pour the egg white into the rotating handle under ultrasonic irradiation. The overall temperature of the egg white is close to the curing temperature by auxiliary heating, while the contribution of the ultrasonic scanning device is to providing heat energy above the overall temperature.

The projection pattern is controlled by the computer and synchronized with the rotation. A projection pattern is the data of a pyramid region or a cylinder region derived from the projection operation. An acoustic lens can also be added to the sound field, and the acoustic lens is used as an acoustic unit. A pattern in a projection pattern that contains a number of pyramid or cylinder regions. After the ultrasonic wave passes through the acoustic lens, a plurality of pyramid or cylinder ultrasonic beams are simultaneously thrown into the egg white. The ultrasonic scanning device and the number of acoustic lenses can also be increased. When the ultrasonic beam to the egg white is enough, the rotating parts can be omitted.

Among them, the results of projection operation can be filtered or weighted, or both, can without filtering and weighting operations. The filtering is for clearer energy distribution. The weighting is to compensate for the absorption of ultrasound by the material. The weighting is in order to avoid the block from formed part.

When a part of the egg white reaches the curing temperature, this part of the egg is solidified. On the whole, the shape of the curing region corresponds to the shape of the 3D model. Realized the conversion from virtual model to real object. The same or similar method may be applied to other food ingredients, resins, plastics, heat curing agents, metals, ceramics, rubber, glass and the like.

### 3 In the course of annealing, ultrasonic forming is used

In a glass or metal casting and forging, the material is formed by molding and cooling. By applying the present invention, ultrasonic waves are applied during cooling and the energy distribution of ultrasonic waves is formulated in accordance with a digital model. A stress distribution, or stress resistance, that matches the digital model can be obtained. Finally, get the divided materials in natural/vibration/beating action, the material may be including glass and/or metal casting. The casting including forging.

A phased array ultrasonic generation device on the vessel wall of a container distributes ultrasonic waves directed to molten glass or molten metal.

The projection value of each direction is obtained according to the projection operation to modulate the ultrasonic beam. A projection pattern is the data of a pyramid region or a cylinder region derived from the operation. The modulated ultrasonic beams are projected directly into the molten glass or molten metal. Each beam in the actual space corresponds to the beam represented by the computed results in the virtual space. Each direction of the ultrasonic beam is superimposed to form a specific energy distribution in space. These energy distributions are derived from digital models. The energy is absorbed by the glass or metal in solidification, and then the glass or metal in solidification is transformed. The digital model is transformed into an entity.

Among them, the results of projection operations can be filtered or weighted, or both, can without filtering and weighting operations. The filtering is for clearer energy distribution. The weighting is to compensate for the absorption of ultrasound by the material. The weighting is in order to avoid the block from formed part.

### 4 the particles are transported by ultrasonic wave to make the spatial distribution of particles

Fine particles are driven by ultrasonic waves. More ultrasonic energy, more/fewer particles. Less ultrasonic energy, more/fewer particles. By using the invention, the energy distribution of the ultrasonic wave is controlled, and the spatial distribution of the particles is controlled. That is, the display is realized. Fix particles by heating or by any other means. Finally, the 3D printing is realized.

A phased array ultrasonic generator make phased array ultrasonic waves distributed over the space in a container. Fill the container with particles at any time.

The projection value of each direction is obtained according to the projection operation to modulate the ultrasonic beam. A projection pattern is the data of a pyramid region or a cylinder region derived from the operation. The modulated ultrasonic beam is projected directly into the space inside the container. Each beam in the actual space corresponds to the beam represented by the computed results in the virtual space. Each direction of the ultrasonic beam is superimposed to form a specific energy distribution in space. These energy distributions are derived from digital models. The control of ultrasonic energy distribution is to control the spatial distribution of particles. That is, the display is realized. Fix particles by heating or by any other means. Finally, the 3D printing is realized.

Among them, the results of projection operations can be filtered or weighted, or both, can without filtering and weighted operations. The filtering is for clearer particle distribution. The weighting is to compensate for the attenuation of ultrasound.

### 5 Many rotating beams are superimposed to display

Use frosted glass or any diffuse screen as an imaging panel.

The beam source in the rotation is used as a light emitting unit. The point is that the beam tilts slightly into the panel to form a visible straight line. The light beam source in the rotation creates a circular spot extending from the center to the far end of the imaging panel

Arranging a light-emitting unit array in a rectangular frame shape.

The light in each direction of each light emitting unit is controlled by a computer. The data of a sector region derived from projection operation. The collaboration of all the light-emitting units creates visual images. The digital representation of the image is converted into optics.

Among them, the results of projection operations can be filtered or weighted, or both, can without filtering and weighted operations. The Filtering is for clearer images. The weighting is to compensate for uneven luminance of the picture.

### Embodiments of the present invention

### 1 Optical scheme in rapid prototyping/additive manufacturing/3D printing field

### (1) A scheme for using rotation unit

Position forming substance on rotation unit. If one of the two states is liquid, then it can be used within/without the transparent container to hold the forming substance. If one of the two states is gas, it can be used within/without sealing the transparent container to hold the forming substance.

The rotating member starts rotating, and light emitting unit project beams to the forming substance. The beams are modulated. Modulation is performed according to the projection operation. The operations can be filtered, weighted, or not filtered or weighted. In the case of a slow change in the nature of a substance, if it is liquid or gas before it is changed, then liquid or gas will need to be rotated along with the container. Under the premise that the substance is rapidly changing, it may permit, but does not require, the liquid or gas to rotate along with the container. In the premise of rapid change in the nature of the forming material, forming material including solid powder, liquid, and gas, allowing light at the same time it or injection forming material, without advance with a container. Allow the flow of material from forming region and illumination region.

In the rotation, a modulated beam is applied to complete the forming process. Each beam in the actual space corresponds to the beam represented by the calculated results in the virtual space. Each beam in the actual space can also be derived from projection data acquisition.

A single axis rotating component achieves full circumferential illumination after a cycle. For forming purposes, it can take only one cycle, or more than a cycle, and can take less than a cycle. The multiple axes rotating parts can make the whole space angle and illuminate in any direction. In order to achieve the purpose of forming, it can be used in all directions of the whole space, or in some directions.

### (2) A scheme for using light path unit

Position forming substance in the workspace. If one of the two states is liquid, then it can be used within/without the transparent container to hold the forming substance. If one of the two states is gas, it can be used within/without sealing the transparent container to hold the forming substance.

The light emitting unit projects a beam of light into the forming substance. The light emitted by a light emitting unit contains many parts simultaneously. Each part contains light from the pyramid region. The light beam projects directly into the forming substance or passes through the light path unit to change the light path and then projects to the forming substance, thus completing the pyramid beam which is applied to the forming substance and surrounds the forming substance. The beams are modulated. Modulation is performed according to the projection operation. The operation that can be filtered, weighted, or not filtered and/or weighted. In the case of a slow change in the nature of a substance, if it is liquid or gas before it is changed, then liquid or gas will need to be rotated along with the container. Under the premise that the substance is rapidly changing, it may permit, but does not require, the liquid or gas to rotate along with the container. The forming substance including solid powder, liquid and/or gas. allowing spray substance in light irradiation procedure, without advance with a container. Allow the forming substance flow leave illumination region.

The forming process is performed by applying a modulated beam to the forming substance. Each beam in the actual space corresponds to the beam represented by the calculated results in the virtual space. Each beam in the actual space can also be derived from projection data acquisition. In order to achieve the goal of forming, the beam can be covered with a whole circle or the entire space angle, also can not cover the whole circle or the entire space angle.

### 2 Ultrasonic scheme in rapid prototyping/additive manufacturing/3D printing field

### (1) A scheme for using rotating unit

Position forming substance on rotation unit. If one of the two states is liquid, then it can be used within/without the transparent container to hold the forming substance. If one of the two states is gas, it can be used within/without sealing the transparent container to hold the forming substance.

The rotation unit starts rotating, and ultrasonic emitting unit project beams to the forming substance. The beams are modulated. Modulation is performed according to the projection operation. The operations can be filtered, weighted, or not filtered or weighted. In the case of a slow change in the nature of a substance, if it is liquid or gas before it is changed, then liquid or gas will need to be rotated along with the container. Under the premise that the substance is rapidly changing, it may permit, but does not require, the liquid or gas to rotate along with the container. In the premise of rapid change in the nature of the forming material, forming material including solid powder, liquid, and gas, allowing ultrasonic at the same time it or injection forming material, without advance with a container. Allow the forming substance flow leave illumination region.

In the rotation, a modulated beam is applied to complete the forming process. Each beam in the actual space corresponds to the beam represented by the calculated results in the virtual space. Each beam in the actual space can also be derived from projection data acquisition.

A single axis rotating component achieves full circumferential illumination after a cycle. For forming purposes, it can take only one cycle, or more than a cycle, and can take less than a cycle. The multiple axes rotating parts can make the whole space angle and illuminate in any direction. In order to achieve the purpose of forming, it can be used in all directions of the whole space, or in some directions.

### (2) A scheme for using acoustic units

Position forming substance in the workspace. If one of the two states is liquid, then it can be used within/without the transparent container to hold the forming substance. If one of the two states is gas, it can be used within/without sealing the transparent container to hold the forming substance.

The ultrasonic emitting unit projects a beam of ultrasonic into the forming substance. The ultrasonic emitted by an ultrasonic emitting unit contains many parts simultaneously. Each part contains ultrasonic from the pyramid region. The ultrasonic beam projects directly into the forming substance or passes through the acoustic unit to change the ultrasonic path and then projects to the forming substance, thus completing the pyramid beam which is applied to the forming substance and surrounds the forming substance. The beams are modulated. Modulation is performed according to the projection operation. The operation that can be filtered, weighted, or not filtered and/or weighted. In the case of a slow change in the nature of a substance, if it is liquid or gas before it is changed, then liquid or gas will need to be rotated along with the container. Under the premise that the substance is rapidly changing, it may permit, but does not require, the liquid or gas to rotate along with the container. The forming substance including solid powder, liquid and/or gas. allowing spray substance in ultrasonic irradiation procedure, without advance with a container. Allow the forming substance flow leave illumination region.

The forming process is performed by applying a modulated beam to the forming substance. Each beam in the actual space corresponds to the beam represented by the calculated results in the virtual space. Each beam in the actual space can also be derived from projection data acquisition. In order to achieve the goal of forming, the beam can be covered with a whole circle or the entire space angle, also can not cover the whole circle or the entire space angle.

### 3 A scheme for 3D/2D display or 2D printing

### (1) A scheme for using light beam

Light emitting unit: The light emitting unit selectively emits light beams to a certain space angle. The beam in each direction can be independently modulated without the beam in other directions.

Light-emitting array: arrays of many light-emitting units. Usually arranged in a rectangular box or any other shape, there are many light emitting units on the border of the box and there is no inside the frame, or be arranged arbitrarily.

A Light-emitting array is used in the scheme. The beam is injected into the imaging panel. The beams are modulated. Modulation is performed according to the projection operation. The modulation can also be carried out in accordance with the projection data acquisition results. The operations can be filtered, weighted, or both, can without filtering and weighting. Two examples are used to inject the beam into the imaging panel: one way is to tilt the beam parallel to the imaging panel slightly toward the faceplate; the other way is to inject the beam from the side of the panel into the imaging panel with a thickness.

The panel presents the image referenced the projection operation.

### (2) A scheme for using electronic current

Wiring with electroluminescent material or electrochromic material on a substrate. In general, the wiring is in line segments.

The endpoints of a line segment are always at the boundary of the panel's effective area. On the boundary, many segments are connected at the same point, each line extending in different directions. Each segment can be controlled by addressing parts. The effective area is the imaging area, and the panel may be a little larger than the imaging region. A point on the boundary of a region may be a small area on the boundary of a region that connects the line extending to another point. Addressing unit are not limited to one approach. An example is: for any two points on the boundary of an effective area, one of them flows into the current and the other flows out of the current. At a time, the line between the two points is selected, while other lines are not selected, that is, for the purpose of addressing.

Current is used to driving electroluminescent or electrochromic materials. These currents are modulated. Modulation is performed according to the projection operation. The modulation can also be carried out in accordance with the projection data acquisition results.

The projection operation can be filtered, weighted, or both, can without filtering and weighting operations.

The panel presents the image referenced the projection operation.

### Industrial applicability

The present invention uses the projection operation and the back projection method of the computer tomography (CT) technology to apply in the field of rapid prototyping/additive manufacturing/3D printing, 3D/2D display or 2D printing. The transformation from virtual model to real object or real image. Solving the problem of forming layer by layer processing leads to slow problems. The problem of material shrinkage in progressive processing is solved by rapid exposure. avoiding the difficulty of making a flat panel.

## Claims

1. A method of making a two-dimensional and/or three-dimensional real image, which is **characterized in that** using the back projection method, the back projection method making rays distributing in more than one sector or pyramid regions from more than one direction toward to the imaging area, every sector/pyramid region of rays has a parameter distribution. all the sector/pyramid regions of rays forming a parameter distribution due to superposition in space, the parameter distribution due to superposition representing the real image.

2. According to the method of making a 2D/3D real image of claim 1, which is **characterized in that** using a light, electromagnetic wave, high-energy radiation, particle flow, acoustic wave, shock wave, current and/or chemical wave as a ray.

3. According to the method of making a 2D/3D real image of claim 1, which is **characterized in that** using Ray projection unit and/or Ray scanning unit, including Optical projection device, laser scanning device, electromagnetic wave scanning device, electron beam scanning device and/or ultrasonic beam scanning device.

4. According to the method of making a 2D/3D real image of claim 1, which is **characterized in that** the real image rotating/moving/resting relative to the other parts.

5. According to the method of making a 2D/3D real image of claim 1, which is **characterized in that** relative with a straight line, the line can also be a polygonal line and/or curve.

6. According to the method of making a 2D/3D real image of claim 1, which is **characterized in that** using the method to implement two-dimensional display, three-dimensional display, 2D printing and/or 3D printing.

7. According to the method of making a 2D/3D real image of claim 6, which is **characterized in that** using Light-induced substance, Thermally induced substance, Vibration-induced substance, Fluorescent substance, Astigmatism substance, Emissive light substance and/or Passive astigmatism substance.

8. A method of making a parameter distribution of rays, which is **characterized in that** using the projection data acquisition or projection operation from a real/virtual 2D/3D graph/image or 3D object into the projection data, the projection data determining the distribution parameters of the rays in sector/pyramid regions, the projection data including not filtered and not weighted data, or including filtered data, or including weighted data, or including filtered and weighted data.

9. A method of making projection data, which is **characterized in that** using projection operation to change a 2D/3D graph/image or 3D object into the projection data, the projection operation including that calculating a virtual beam penetrating the 2D/3D graph/image or 3D object into the projection data, including optional filtering operation and optional weighting operation, all calculations can be at one stage, can be in several stages.

10. According to the method of making projection data of Claim 9, which is **characterized in that** two optional methods£º(1) one way is that the virtual beam attenuation in the internal region of a two-dimensional graphic image or 3D objects, or the virtual beam attenuation in the external region of a two-dimensional graphic image or 3D objects. (2) Another way is that the virtual beam attenuation inside of the near region of the outline of two-dimensional graphic image or near region of the surface of 3D objects, or the virtual beam attenuation outside of the near region of the outline of two-dimensional graphic image, or the virtual beam attenuation outside of the near region of the surface of 3D objects.
